# EUROPÄISCHE PATENTSCHRIFT

(11) **EP 0 699 599 B1**
(45) Veröffentlichungstag und Bekanntmachung des Hinweises auf die Patenterteilung: **02.06.1999**
(21) Anmeldenummer: 95112923.8
(22) Anmeldetag: 17.08.1995
(51) Int. Cl.: B65D 88/16, B32B 7/02, B65D 90/46

(54) **Kunststoffverpackungsbehälter mit verbesserter elektrostatischer Ableitfähigkeit**
Synthetic packaging container with an improved electrostatic discharge
Récipient d'emballage synthétique avec une décharge électrostatique amélioré

(30) Priorität: 01.09.1994 DE 4431046
(43) Veröffentlichungstag der Anmeldung: 06.03.1996
(73) Patentinhaber: Empac Verpackungs GmbH, 48282 Emsdetten (DE)
(72) Erfinder: Dinter, Peter, D-65375 Hallgarten (DE); Nowotnick, Joachim, D-60326 Frankfurt (DE)
(74) Vertreter: Pott, Ulrich

(56) Entgegenhaltungen:
- EP-A- 0 003 402
- DE-A- 4 309 832
- FR-A- 2 196 904
- US-A- 2 405 104
- US-A- 5 073 421

## Beschreibung

Zum Befüllen, Lagern und Transportieren von festen, flüssigen und pastösen Produkten, werden sowohl im industriellen Bereich als auch im Vertrieb von Konsumgütern Behältnisse in unterschiedlichsten Ausführungsvarianten eingesetzt, insbesondere was ihre Werkstoffe und konstruktive Gestaltung betrifft. Für den Umschlag von festen Füllgütern in pulver-, granulat- oder chipsförmiger oder stückiger Form steht ein umfangreiches Behältersortiment wie Fässer, Kanister, Eimer aus Blech oder Kunststoff, Fibre-Trommeln, Säcke aus Papier, Kunststoff oder textilen Geweben, flexible Schüttgutcontainer (FIBCs) aus Kunststoffgeweben oder Kunststofffolien, Kisten aus Holz oder Wellpappe mit Innenbehältern (sog. Bag in Box) etc. zur Verfügung.

Wegen der günstigen Eigenschaften der Kunststoffe werden vorgenannte Packmittel zunehmend aus polymeren Werkstoffen hergestellt. Einem universellen Einsatz von Kunststoffpackmitteln, insbesondere in solchen Bereichen, wo beim Befüllen und Entleeren des Packgutes durch dessen elektrostatische Aufladung Explosionsgefahr nicht ausgeschlossen werden kann, steht jedoch die schlechte elektrische Leitfähigkeit der Kunststoffe entgegen. Maßnahmen, dies etwa durch Einarbeitung von leitfähigen Additiven, wie z. B. Ruß, Graphit etc. in die Polymermatrix oder durch Oberflächenbeschichtung des Kunststoffpackmittels mit Antistatika zu verbessern, können nur als unbefriedigend bezeichnet werden. Entweder gewährleisten die inkorporierten Additive beziehungsweise die oberflächlich applizierten Antistatika keine dauerhafte Leitfähigkeit des Polymers über die gesamte Zeitdauer seines bestimmungsgemäßen Einsatzes hinweg oder die Zuschlagstoffe verschlechtern andere spezifische Eigenschaften des Polymerwerkstoffes. So beeinträchtigen z.B. die für eine gute Leitfähigkeit notwendigen Mengen an Ruß oder Graphit die mechanischen Festigkeiten, das Siegelverhalten, die Abriebfestigkeit und das Permeationsverhalten eines Polymerwerkstoffes, beziehungsweise des daraus gefertigten Produktes, wie z.B. einer Folie, in beträchtlichem Umfang.

Ein gattungsgemäßer Verpackungsbehälter ist durch die EP-A- 0 003 402 bekanntgeworden.

Ausgehend von den Defiziten der kommerziell am Markt erhältlichen Kunststoffbehälter stellte sich somit die Aufgabe, ein Transportbehältnis vorzuschlagen, das sowohl als eigenständig freitragendes System als auch in Kombination mit tragenden Außenbehältern als sogenannter "In-liner" fungieren kann, und mit nachstehenden Eigenschaften wie
- gute, dauerhafte elektrische Ableitfähigkeit,
- niedrige Permationswirkung gegenüber Sauerstoff und Feuchtigkeit,
- hohe Abriebfestigkeit gegenüber dem Füllgut,
- einfache und kostengünstige Fertigung,
- variabel in der Formgebung
   die Nachteile der bekannten Systeme überwindet.

Gelöst wird diese Aufgabe in der Form, daß der Verpackungsbehälter aus einer Verbundfolien-Kombination gefertigt wird, die aus einer als Außenschicht des Behälters fungierenden Polymerfolie mit Sperrschichteigenschaften, einer Zwischenschicht aus elektrisch leitfähigem Material die über elektrische Kontaktstellen mit einem Erdungssystem in Verbindung steht, sowie einer weiteren, die Innenschicht des Behälters bildenden Polymerfolie aufgebaut ist, wobei die polymere Behälterinnenschicht ein Perforationsmuster mit Ausnehmungen trägt, über die der Ladungstransfer vom elektrostatisch aufgeladenen Füllgut zur elektrisch leitfähigen Behälterzwischenschicht sowie zu einem mit dieser kontaktierten Erdungssystem erfolgt.

Bevor näher auf Einzelheiten der Ausgestaltung des erfindungsgemäßen Verpackungsbehälters eingegangen wird, soll nachfolgend anhand von Zeichnungen das Prinzip der Erfindung näher erläutert werden.
Figur 1 zeigt an einem schematisch skizzierten erfindungsgemäßen Behälter das physikalische Grundprinzip des Ladungstransfers.
Figur 2 zeigt einen Querschnitt durch eine für den erfindungsgemäßen Verpackungsbehälter geeignete Verbundfolienkombination.
Figur 3 zeigt an einem Ausschnitt aus einer Behälterwand Beispiele möglicher Perforationsmuster.
Figur 4 zeigt einen erfindungsgemäßen Verpackungsbehälter als sogenannten "In-liner" in einem flexiblen Schüttgutbehälter (FIBC).
Figur 5 zeigt einen erfindungsgemäßen Behälter als thermogeformten "In-liner" in einem Faß.

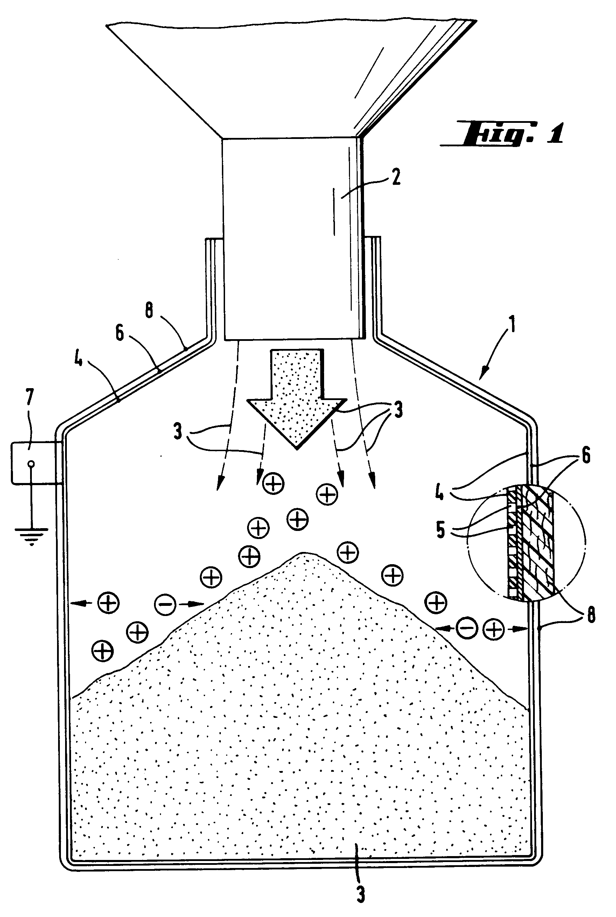

Im einzelnen ist in Figur 1 dargestellt wie der Verpackungsbehälter 1 durch das Füllrohr 2 mit dem Packgut 3 aus einem nicht dargestellten Vortatssilo befüllt wird. Hierbei erfährt das Packgut 3 infolge von Reibung und Trennvorgängen elektrische Aufladungen. Diese elektrostatischen Ladungen sammeln sich im Packgut 3 an und können nach Erreichen der Durchbruchsspannung eine Gasentladung auslösen, als deren Folge ein Ladungstransfer vom Packgut 3 zur Behälterinnenwandung 4 einsetzt. Erfindungsgemäß gelangen die Ladungen von dem Verpackungsbehälter 1 über die in der Innenschicht 4 ausgesparten Öffnungen 5 zu der elektrisch leitfähigen Zwischenschicht 6 und werden von dieser über eine mit ihr in Verbindung stehende Kontaktstelle 7 an Erde weitergeleitet. Die Behälteraußenschicht 8 erfüllt vorteilhaft neben der Schutzfunktion für die elektrisch leitfähige Zwischenschicht 6 gegenüber mechanischen Beschädigungen gleichzeitig auch Barrierewirkung gegenüber Sauerstoff oder anderen Gasen, Feuchtigkeit, Aromastoffen und ähnlichen.

Zur Ausgestaltung des erfindungsgemäßen Verpackungsbehälters bieten sich bevorzugterweise Verbundfolienkombinationen an, da durch Auswahl geeigneter Einzelkomponenten mit spezifischen Eigenschaften ein Verpackungsbehälter mit gezieltem Anforderungsprofil geschaffen werden kann. Hinsichtlich Auswahl des Materials für die Behälterinnenschicht 4 gemäß Figur 2 stehen dem Hersteller durch Wegfall der bisherigen Zwangsforderung nach elektrischer Leitfähigkeit dieses Werkstoffes, wesentlich mehr Freiheitsgrade zur Verfügung. So können erfindungsgemäß unpigmentierte, abriebfestere, gegenüber warmabgefülltem Schüttgut temperaturbeständigere oder gegenüber Füllgutanhaftungen dehäsiv ausgerüstete Folien eingesetzt werden. In Betracht kommen hierfür z.B. Folien aus Polyester, Polypropylen, Polyäthylen, Polyamid, Fluorpolymeren, Ethylenvinylalkohol-Copolymeren, etc. Sollten die Folien aus den vorgenannten Polymeren nicht heißsiegelfähig sein, so wird der erfindungsgemäße Verpackungsbehälter durch Verklebung mittels geeigneter Kleber, Hot-melts oder selbsttragender Adhesivschichten in Folienform gefertigt. Bevorzugterweise werden für die Innenschicht 4 jedoch heißsiegelfähige Folien entweder als Monofolie oder auch coextrudierte Folie verwendet. Dadurch ist der Fertigungsvorgang für den erfindungsgemäßen Verpackungsbehälter wesentlich kostengünstiger zu gestalten.

Das für den Ladungsabfluß in die Behälterinnenschicht 4 eingebrachte Perforationsmuster in Form von Öffnungen 5 kann in einfacher Weise bereits vor dem Kaschieren der Folien zum Triplexlaminat am Monofilm 4 aufgetragen werden. Hierzu bieten sich herkömmliche Verfahren wie Flammperforation, Stanzen, Nadelung oder Coronaperforation an. Denkbar ist auch ein nachträglicher Perforationsschritt an der fertigen Verbundkombination mittels Lasertechnologie.

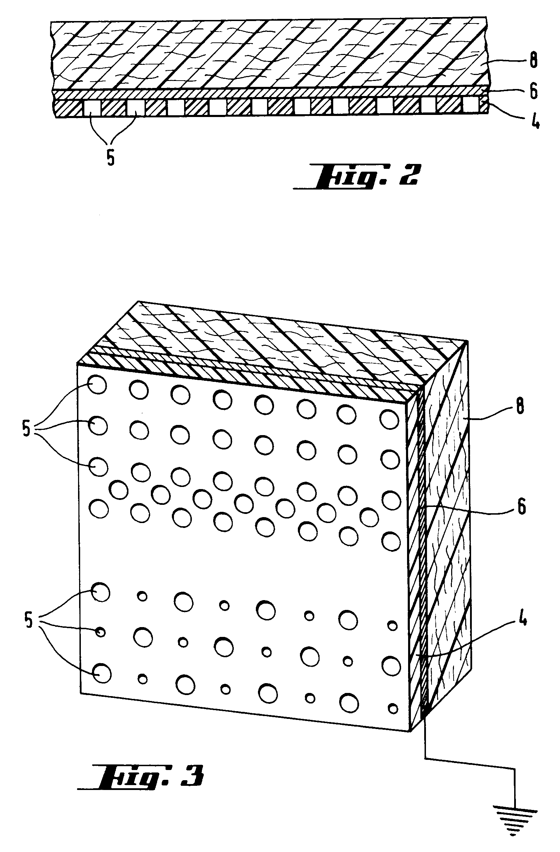

Die in Figur 3 gezeigten Perforationsmuster stehen nur beispielhaft für eine Vielzahl möglicher Gestaltungsformen. Öffnungsgröße, -anzahl und -abstand richten sich nach dem angestrebten bzw. zulässigen Oberflächenwiderstand. Die geometrische Gestaltung der Öffnungsform ist im wesentlichen frei wählbar, vorzugsweise weisen die Öffnungen eine runde Form auf. Der Abstand zwischen den einzelnen Öffnungen liegt im Bereich zwischen 5 bis 30 mm, vorzugsweise von 5 bis 20 mm. Der mittlere Durchmesser der Öffnungen kann zwischen 0,2 bis 10 mm liegen, vorzugsweise zwischen 0,3 bis 5 mm. Die Öffnungen können relativ zueinander im wesentlichen gleiche oder auch unterschiedliche Größe haben.

Das als Behälterzwischenschicht 6 eingesetzte Material soll erfindungsgemäß in erster Linie gute elektrische Leitfähigkeit besitzen. In dieser Hinsicht liegen Metallschichten mit Abstand an erster Stelle in der Rangfolge der infragekommenden Werkstoffe. Dünne Aluminiumfolien in Stärken von 3 bis 12 µm, wie sie z.B. zur Produktion flexibler Lebensmittelverpackungen gängig sind, stellen erfindungsgemäß eine bevorzugte Lösung dar.

Eine weitere Variante repräsentieren Folien aus intrinsisch leitfähigen Polymeren auf Basis von Polyacetylen, Polypyrrol, Polyparaphenylen, Polyparaphenylensulfid, Polythiophen oder chargetransfer Komplexen. Alternativ zu den vorgenannten Produkten kommen auch solche Folien in Frage deren Polymermatrix durch Einarbeitung elektrisch leitfähiger Pigmente, wie z.B. Ruß, Graphit oder Kohlenstoffasern modifiziert worden ist.

Ebenfalls in Betracht zu ziehen sind Folien, auf denen Leitschichten durch Beschichtung, Bedruckung, Vakuummetallisierung oder Sputtern sowohl vollflächig als auch partiell appliziert sind. Wesentlich ist nur, daß die leitfähigen Bahnen oder Strukturen mit der Perforation der Verpackungsbehälterinnenschicht korrespondieren. Nutzt man die vorbeschriebenen Methoden zur Erzielung leitfähiger Schichten, kann die Konstruktion des erfindungsgemäßen Verpackungsbehälters dahingehend vereinfacht werden, daß die elektrisch leitfähige Schicht 6 direkt auf die Seite der Behälteraußenschicht 8 appliziert wird, die beim Laminieren mit der perforierten Behälterinnenschicht 4 in Kontakt gebracht wird. In diesem Falle ist die elektrisch leitfähige Zwischenschicht 6 kein selbsttragendes Substrat, sondern ein Bestandteil der Behälteraußenschicht 8.

Die Aufgabe der elektrisch leitfähigen Zwischenschicht 6 kann auch durch faserförmige Gebilde wahrgenommen werden, die entweder aus metallischen Werkstoffen, synthetischen, inhärent leitfähigen Materialien, wie z.B. Kohlenstoffasern oder solchen Produkten bestehen, die durch Oberflächenpräparation, wie z.B. Metallisierung, leitfähig gemacht worden sind. Insofern kann die Zwischenschicht 6 z.B. aus Textil-, Glas-, Kohlenstoff-oder Aramidfasern bzw. Flächengebilden aus den vorgenannten Fasern in Gestalt von Gelegen, Geweben, Gewirken, Gestricken oder Vliesen bestehen.

Was die Außenschicht 8 des erfindungsgemäßen Behälters anbelangt, so soll sie vorteilhaft einerseits hohe mechanische Festigkeit gegenüber Beschädigungen beim Transport und Handling und andererseits gute Barrierewirkung gegenüber Sauerstoff und/oder anderen Gasen, Feuchtigkeit, Aromaverlust etc. aufweisen. Erfindungsgemäß besonders geeignet sind hierfür Monofilme oder coextrudierte Mehrschichtfolien aus Polyester, Polyamid, Ionomeren, Ethylenvinylalkohol-Coplymeren etc. Die Aufzählung vorstehender Produkte schließt selbstverständlich andere geeignete Materialien nicht aus.

Hergestellt werden kann der erfindungsgemäße Behälter durch Verklebung mittels geeigneter Adhäsive, durch thermisches Verschweißen oder Ultraschallverschweißung, wobei bereits hier durch Vorlegen entsprechend geformter Einzelteile die endgültige Gestalt des Behälters festgelegt ist. Bei Verwendung geeigneter Folienkombinationen ist auch die Herstellung eines Vorformlings mit nachgeschalteter Endformung unter Anwendung von Thermoformverfahren möglich. Diese Methode wird insbesondere dann zur Anwendung gelangen, wenn der erfindungsgemäße Verpackungsbehälter als sogenannter "In-liner" mit einem in der Form vorgegebenen Außenbehälter korrespondieren muß.

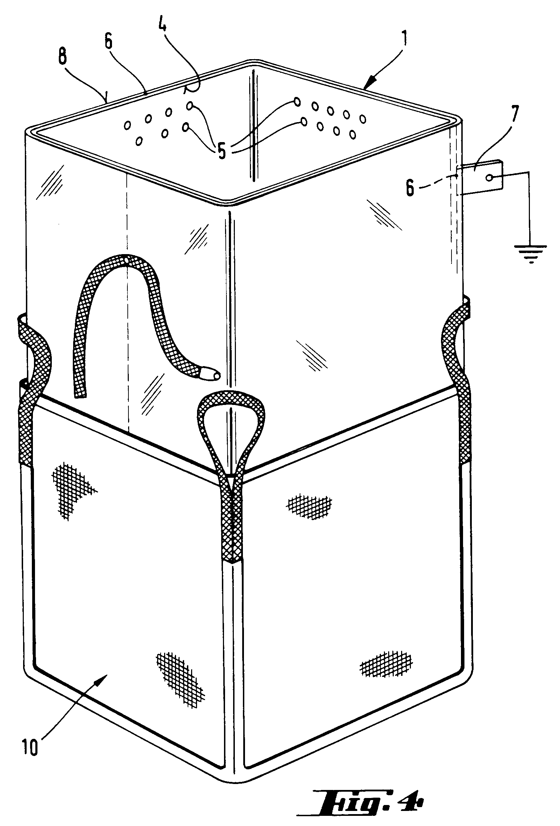

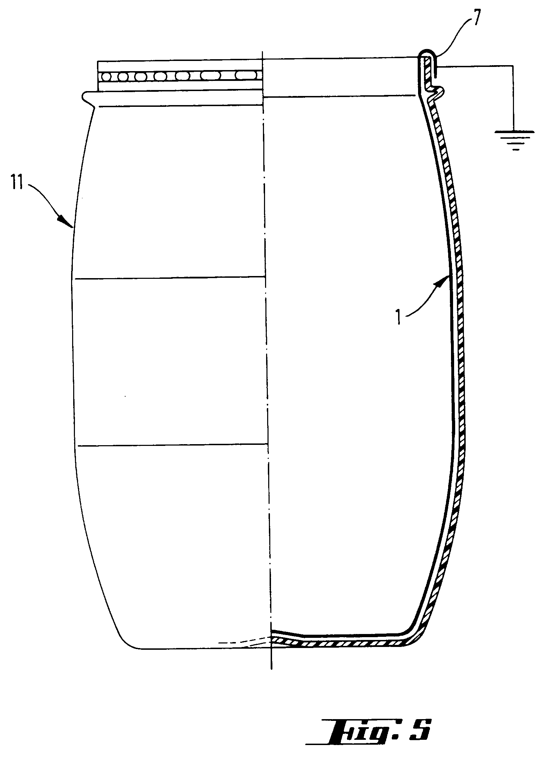

Die Anwendungsmöglichkeiten des erfindungsgemäßen Verpackungsbehälters als "In-liner" werden durch die Figuren 4 und 5 näher erläutert. Figur 4 zeigt den erfindungsgemäßen Behälter 1 in seiner Funktion als kubisch geschweißter "In-liner" in einem flexiblen Schüttgutbehälter 10, der herkömmlicherweise aus unbeschichteten oder beschichteten textilen Geweben aus Polyester- oder Polypropylenfasern besteht. Sorgt man in der betrieblichen Praxis für einen guten innigen Kontakt zwischen dem Einfüllstutzen des erfindungsgemäßen Verpackungsbehälters mit dem in der Regel aus Metall bestehenden Befüllstutzen des Vorratssilos, so kann unter Umständen auf gesonderte Erdungskontakte 7 verzichtet werden.

Figur 5 zeigt den erfindungsgemäßen Verpackungsbehälter 1 als "In-liner" in einem blasgeformten Kunststoffaß. Die mit dem Außenbehälter 11 korrespondierende Form des "In-liners" 1 wird durch Thermoformen erreicht.

Für Anwendungsgebiete, in denen für weniger kritische Produkte der Verpackungsbehälter keine oder nur eine geringe Barrierewirkung haben muß, kann für die Behälterfertigung auch nur eine zweischichtige Verbundfolienkomination eingesetzt werden. In diesem Falle besteht dann die Verbundfolienkombination aus einer polymeren Innenschicht mit Perforation sowie einer elektrisch leitfähigen, an Erdpotential anliegenden Außenschicht aus den vorstehend beschriebenen leitfähigen Werkstoffen.

## Patentansprüche

1. Verpackungsbehälter (1) zur Aufnahme von Füllgut (3) enthaltend eine mehrschichtige Verbundfolienkombination, die aus einer als Außenschicht (8) des Behälters fungierenden Polymerfolie mit Sperrschichteigenschaften, einer Zwischenschicht (6) aus einem elektrisch leitfähigen Material, die über elektrische Kontaktstellen (7) mit einem Erdungssystem in Verbindung steht sowie einer weiteren, die Innenschicht (4) des Verpackungsbehälters bildenden Polymerfolie aufgebaut ist, dadurch gekennzeichnet, daß die weitere, die Innenschicht des Verpackungsbehälters bildende Polymerfolie ein Perforationsmuster (5) trägt.

2. Verpackungsbehälter gemäß Anspruch 1 dadurch gekennzeichnet, daß die die Innenschicht (4) des Verpackungsbehälters bildende Polymerfolie eine heißsiegelfähige Monofolie oder eine coextrudierte Folie ist.

3. Verpackungsbehälter gemäß Anspruch 1 oder 2, dadurch gekennzeichnet, daß die die Innen- und Außenschicht (4; 8) des Behälters bildenden Polymerfolien aus Polyester, Polypropylen, Polyäthylen, Polyamid, Fluorpolymeren, Ethylenvinylalkohol-Copolymeren, Polyvinylchlorid, Polyvinylacetat, Polycarbonat oder Polyacrylnitril aufgebaut sind.

4. Verpackungsbehälter gemäß einem der Ansprüche 1 bis 3, dadurch gekennzeichnet, daß das in die Behälterinnenschicht eingebrachte Perforationsmuster Öffnungen (5) aufweist, die mittels Flammperforation, Stanzen, Nadelung, Coronaperforation oder Laser eingebracht werden.

5. Verpackungsbehälter gemäß einem der Ansprüche 1 bis 4, dadurch gekennzeichnet, daß die elektrisch leitfähige Zwischenschicht (6) Metalle, wie Aluminium, Kupfer, Nickel oder Eisen enthält.

6. Verpackungsbehälter gemäß einem der Ansprüche 1 bis 5, dadurch gekennzeichnet, daß die elektrisch leitfähige Zwischenschicht (6) intrinsisch leitfähige Polymeren wie Polyacetylen, Polypyrrol, Polyparaphenylen, Polyparaphenylensulfid, Polythiophen oder chargetransfer Komplexe enthält.

7. Verpackungsbehälter gemäß einem der Ansprüche 1 bis 4, dadurch gekennzeichnet, daß die elektrisch leitfähige Zwischenschicht (6) aus Polymeren aufgebaut ist, in deren Matrix elektrisch leitfähige Pigmente wie Ruß, Graphit, Koks oder Kohlenstoffasern inkorporiert sind.

8. Verpackungsbehälter gemäß einem der Ansprüche 1 bis 4, dadurch gekennzeichnet, daß die elektrisch leitfähige Zwischenschicht (6) als auf ein Trägersubstrat durch Bedruckung, Beschichtung, Vakuummetallisierung oder Sputtern aufgebrachte Leiterschicht ausgebildet ist, wobei als Trägersubstrat vorzugsweise die polymere Außenschicht des Verpackungsbehälters eingesetzt wird.

9. Verpackungsbehälter gemäß einem der Ansprüche 1 bis 4, dadurch gekennzeichnet, daß die elektrisch leitfähige Zwischenschicht (6) aus leitfähigen Fasergebilden in Form von Gelegen, Geweben, Gewirken, Gestricken oder Vliesen gebildet ist.

10. Verpackungsbehälter gemäß einem der Ansprüche 1 bis 9, dadurch gekennzeichnet, daß die elektrisch leitfähige Zwischenschicht (6) als diskontinuierliche Zwischenschicht ausgebildet ist.

11. Verpackungsbehälter gemäß einem der Ansprüchen 1 bis 10, dadurch gekennzeichnet, daß die die Außenschicht (8) des Behälters bildende Polymerfolie eine mechanisch hochfeste Folie mit niedriger Permeationswirkung gegenüber Gasen, insbesondere Sauerstoff, Feuchtigkeit und Aromastoffen ist.

12. Verpackungsbehälter gemäß einem der Ansprüche 1 bis 11, dadurch gekennzeichnet, daß die die Innenschicht (4) und/oder die Außenschicht (8) bildende Polymerfolie aus uniaxial oder biaxial verstreckten Polymerfolien besteht.

13. Verpackungsbehälter gemäß einem der Ansprüche 1 bis 12, dadurch gekennzeichnet, daß auch die die Außenschicht (8) des Verpackungsbehälters bildende Polymerfolie perforiert ist.

14. Verfahren zum Herstellen eines Verpackungsbehälters (1) nach einem der Ansprüche 1 bis 13, bei dem eine mehrschichtige Verbundfolienkombination hergestellt und zu einem Verpackungsbehälter verformt wird, dadurch gekennzeichnet, daß die Nähte des geformten Verpackungsbehälters durch Verklebung mittels geeigneter Adhäsive gebildet werden.

15. Verfahren zum Herstellen eines Verpackungsbehälters (1) nach einem der Ansprüche 1 bis 13, bei dem eine heißsiegelfähige mehrschichtige Verbundfolienkombination hergestellt und zu einem Verpackungsbehälter verformt wird, dadurch gekennzeichnet, daß die Nähte des Verpackungsbehälters durch thermisches Verschweißen oder Ultraschallverschweißung gebildet werden.

16. Verwendung eines Verpackungsbehälters (1) gemäß einem oder mehreren der Ansprüche 1 bis 13 als freitragendes Behältnis.

17. Verwendung eines Verpackungsbehälters (1) gemäß einem oder mehreren der Ansprüche 1 bis 13 als In-liner oder Einstellbehälter in tragenden Außenbehältnissen wie Wellpappeschachteln, Holzkisten, Gitterboxpaletten oder Fässern.

## Claims

1. A packaging container (1) for receiving filled product (3), comprising a multilayered composite film combination which is made up of a polymer film with barrier layer properties, acting as the outer layer (8) of the container, an intermediate layer (6) made of an electrically conductive material which is in connection with a grounding system via electric contact points (7), and also a further polymer film, forming the inner layer (4) of the packaging container, wherein the further polymer film, forming the inner layer of the packaging container, bears a perforation pattern (5).

2. The packaging container as claimed in claim 1, wherein the polymer film forming the inner layer (4) of the packaging container is a heat-sealable monofilm or a coextruded film.

3. The packaging container as claimed in claim 1 or 2, wherein the polymer films forming the inner and outer layer (4; 8) of the container are made up of polyester, polypropylene, polyethylene, polyamide, fluoropolymers, ethylene-vinyl alcohol copolymers, polyvinyl chloride, polyvinyl acetate, polycarbonate or polyacrylonitrile.

4. The packaging container as claimed in any of claims 1 to 3, wherein the perforation pattern made in the container inner layer has openings (5) which are made by flame perforation, punching, needling, corona perforation or laser.

5. The packaging container as claimed in any of claims 1 to 4, wherein the electrically conductive intermediate layer (6) contains metals, such as aluminum, copper, nickel or iron.

6. The packaging container as claimed in any of claims 1 to 5, wherein the electrically conductive intermediate layer (6) contains intrinsically conductive polymers, such as polyacetylene, polypyrrole, polyparaphenylene, polyparaphenylene sulfide, polythiophene or charge-transfer complexes.

7. The packaging container as claimed in any of claims 1 to 4, wherein the electrically conductive intermediate layer (6) is made up of polymers in whose matrix electrically conductive pigments such as carbon black, graphite, coke or carbon fibers are incorporated.

8. The packaging container as claimed in any of claims 1 to 4, wherein the electrically conductive intermediate layer (6) is formed as a conductor layer applied to a supporting substrate by printing, coating, vacuum metallization or sputtering, the polymeric outer layer of the packaging container preferably being used as the supporting substrate.

9. The packaging container as claimed in any of claims 1 to 4, wherein the electrically conductive intermediate layer (6) is formed from conductive fiber structures in the form of laid, woven,

10. The packaging container as claimed in any of claims 1 to 9, wherein the electrically conductive intermediate layer (6) is formed as a discontinuous intermediate layer.

11. The packaging container as claimed in any of claims 1 to 10, wherein the polymer film forming the outer layer (8) of the container is a mechanically high-strength film having a low permeation effect with respect to gases, in particular oxygen, moisture and aromatics.

12. The packaging container as claimed in any of claims 1 to 11, wherein the polymer film forming the inner layer (4) and/or the outer layer (8) comprises uniaxially or biaxially stretched polymer films.

13. The packaging container as claimed in any of claims 1 to 12, wherein the polymer film forming the outer layer (8) of the packaging container is also perforated.

14. A process for producing a packaging container (1) as claimed in any of claims 1 to 13, in which a multilayered composite film combination is produced and formed into a packaging container, wherein the seams of the formed packaging container are formed by adhesive bonding by means of suitable adhesives.

15. A process for producing a packaging container (1) as claimed in any of claims 1 to 13, in which a heat-sealable multilayered composite film combination is produced and formed into a packaging container, wherein the seams of the packaging container are formed by thermal welding or ultrasonic welding.

16. The use of a packaging container (1) as claimed in one or more of claims 1 to 13 as a self-supporting container.

17. The use of a packaging container (1) as claimed in one or more of claims 1 to 13 as an in-liner or insert container in supporting outer containers such as corrugated paperboard boxes, wooden cases, box pallets with mesh panels, or drums.

## Revendications

1. Récipient d'emballage (1) destiné à recevoir un produit à conditionner (3) et comprenant une association de feuilles composites en plusieurs couches, constituée d'une feuille de polymère présentant des propriétés de couche barrière et faisant office de couche externe (8) du récipient d'emballage, d'une couche intermédiaire (6) faite d'un matériau électriquement conducteur et reliée à un système de mise à la terre par l'intermédiaire de points de contacts (7), ainsi que d'une autre feuille de polymère formant la couche interne (4) du récipient d'emballage, caractérisé en ce que l'autre feuille de polymère formant la couche interne du récipient d'emballage porte un réseau de perforations (6).

2. Récipient d'emballage selon la revendication 1, caractérisé en ce que la feuille de polymère formant la couche interne (4) du récipient d'emballage est un film mono scellable à chaud ou une feuille co-extrudée.

3. Récipient d'emballage selon la revendication 1 ou 2, caractérisé en ce que les feuilles de polymère formant les couches interne (4) et externe (8) du récipient sont en polyester, polypropylène, polyéthylène, polyamide, en fluoropolymères, en copolymères d'éthylène et d'alcool vinylique, en polychlorure de vinyle, en polyacétate de vinyle, en polycarbonate ou en polyacrylonitrile.

4. Récipient d'emballage selon l'une des revendications 1 à 3, caractérisé en ce que le réseau de perforations pratiquées dans la couche interne du récipient présente des ouvertures (5) réalisées par perforation à la flamme, poinçonnage, perforation par aiguilles, perforation par effet corona ou laser.

5. Récipient d'emballage selon l'une des revendications 1 à 4, caractérisé en ce que la couche intermédiaire électriquement conductrice (6) contient des métaux tels que l'aluminium, le cuivre, le nickel ou le fer.

6. Récipient d'emballage selon l'une des revendications 1 à 5, caractérisé en ce que la couche intermédiaire électriquement conductrice (6) contient des polymères intrinsèquement conducteurs tels que le polyacétylène, le polypyrrole, le polyparaphénylène, le sulfure de polyparaphénylène, le polythiophène ou des complexes à transfert de charges.

7. Récipient d'emballage selon l'une des revendications 1 à 4, caractérisé en ce que la couche intermédiaire électriquement conductrice (6) est composée de polymères dans la matrice desquels sont incorporés des pigments électriquement conducteurs tels que du noir de fumée, du graphite, du coke ou des fibres de carbone.

8. Récipient d'emballage selon l'une des revendications 1 à 4, caractérisé en ce que la couche intermédiaire électriquement conductrice (6) est réalisée sous la forme d'une couche conductrice déposée par impression, enduction, métallisation sous vide ou pulvérisation sur un substrat porteur, le substrat porteur utilisé étant de préférence la couche externe en polymère du récipient d'emballage.

9. Récipient d'emballage selon l'une des revendications 1 à 4, caractérisé en ce que la couche intermédiaire électriquement conductrice (6) est formée de structures fibreuses conductrices sous la forme de mats, tissus, tricots, tulles ou non-tissés.

10. Récipient d'emballage selon l'une des revendications 1 à 9 , caractérisé en ce que la couche intermédiaire électriquement conductrice (6) est réalisée sous la forme d'une couche intermédiaire discontinue.

11. Récipient d'emballage selon l'une des revendications 1 à 10, caractérisé en ce que la feuille de polymère formant la couche externe (8) du récipient est une feuille présentant une grande résistance mécanique avec un faible effet de perméation vis-à-vis des gaz, notamment de l'oxygène, de l'humidité et des substances odorantes.

12. Récipient d'emballage selon l'une des revendications 1 à 11, caractérisé en ce que la feuille de polymère formant la couche interne (4) et/ou la couche externe (8) est constituée de feuilles de polymère étirées de manière uniaxiale ou biaxiale.

13. Récipient d'emballage selon l'une des revendications 1 à 12, caractérisé en ce que la feuille de polymère formant la couche externe (8) du récipient d'emballage est également perforée.

14. Procédé de fabrication d'un récipient d'emballage (1) selon l'une des revendications 1 à 13, dans lequel on prépare une association de feuilles composites à plusieurs couches et on la transforme en un récipient d'emballage, caractérisé en ce que les joints du récipient d'emballage formé sont réalisés par collage au moyen d'adhésifs appropriés.

15. Procédé de fabrication d'un récipient d'emballage (1) selon l'une des revendications 1 à 13, dans lequel on prépare une association de feuilles composites à plusieurs couches pouvant être scellée à chaud et on la transforme en un récipient d'emballage, caractérisé en ce que les joints du récipient d'emballage formé sont réalisés par thermosoudage ou par soudage aux ultrasons.

16. Utilisation d'un récipient d'emballage (1) selon l'une ou plusieurs des revendications 1 à 13 comme récipient autoporteur.

17. Utilisation d'un récipient d'emballage (1) selon l'une ou plusieurs des revendications 1 à 13 comme doublure interne ou comme récipient inséré dans des conteneurs externes porteurs tels que des boîtes en carton ondulé, des caisses en bois, des palettes-caisses grillagées ou des tonneaux.
